(19) Europäisches Patentamt
European Patent Office
Office européen des brevets

(11) **EP 2 605 356 A1**

(12) **EUROPEAN PATENT APPLICATION**

(43) Date of publication:
**19.06.2013 Bulletin 2013/25**

(51) Int Cl.:
*H02J 3/10* (2006.01)          *H02J 3/18* (2006.01)
*H02J 3/38* (2006.01)

(21) Application number: **11193814.8**

(22) Date of filing: **15.12.2011**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Siemens Aktiengesellschaft**
**80333 München (DE)**

(72) Inventors:
• **Bo, Yin**
  **7330 Brande (DK)**
• **Goldenbaum, Nikolaus Moeller**
  **8600 Silkeborg (DK)**
• **Andresen, Björn**
  **8752 Ostbirk (DK)**

(54) **Method and controller for stably operating a wind turbine in different strength of grid**

(57)     It is described a method for adjusting a reactive power output current (123, 323) of a wind turbine (322) which is connected to a utility grid (328), the method comprising: receiving a voltage error signal (109, 209) indicative of a deviation between an output voltage (105, 205) of the wind turbine and a reference output voltage (107, 207) of the wind turbine; estimating a system gain (129, G(s), k) related to the output voltage of the wind turbine and the reactive power output current of the wind turbine; determining a reference reactive power output current signal (111, 211) related to a reactive power reference output current based on the voltage error signal and the system gain; and outputting, by the wind turbine, the reactive power output current (123, 223), in order to adjust the output voltage of the wind turbine to the reference output voltage of the wind turbine.

## FIG 1

**Description**

Field of invention

The present invention relates to a method and to an arrangement for adjusting a reactive power output current of a wind turbine, wherein a system gain is taken into account and wherein the wind turbine power output is controlled or adjusted in dependence of the system gain.

Art Background

One or more wind turbines may be connected to a point of common coupling (PCC) which in turn is connected to a utility grid to provide electric energy to plural consumers.

Normally, the short circuit capacity at the point of common coupling is used to determine the strength of grid. When wind farm is located close to the main generation units where the short circuit capacity is high, it is said that wind farm is connected to a strong grid. However, in some situations, wind farm is located far from the main generation units the short circuit capacity is low, it is said that wind farm is connected to a weak grid. In other situations, strong grid is changed into weak grid due to fault, for example, trap of transmission lines.

It has been observed that with the same method and arrangement in a wind turbine controller, it might not be able to obtain similar or stable responses at least of some electrical properties for both weak and strong grid.

There may be a need for a method and arrangement for operating a wind turbine in both strong grid and weak grid, especially in a weak grid which is connected to a utility grid, wherein electrical requirements, in particular at the wind turbine and/or at point of common coupling, are satisfied.

Summary of the Invention

This need may be met by the subject matter according to the independent claims. Advantageous embodiments of the present invention are described by the dependent claims.

According to an embodiment of the present invention it is provided a method for adjusting a reactive power output current of a wind turbine which is connected to a utility grid, the method comprising: receiving a voltage error signal indicative of a deviation between an output voltage of the wind turbine and a reference output voltage of the wind turbine; estimating a system gain related to the output voltage of the wind turbine and the reactive power output current of the wind turbine; determining a reference reactive power output current signal and/or a reference reactive power output signal related to a reference reactive power output current and/or a reference reactive power output, respectively, based on the voltage error signal and the system gain; supplying the reference reactive power output current signal to the wind turbine; and outputting, by the wind turbine, the reactive power reference output current, in order to adjust the output voltage of the wind turbine to the reference output voltage of the wind turbine.

The wind turbine may comprise a wind turbine tower, a nacelle mounted on top of the wind turbine tower, a rotation shaft rotatably supported within the nacelle, wherein one, two, three or more rotor blades are connected to the rotation shaft. The rotation shaft may mechanically be coupled to a generator that generates electric energy upon rotation of the rotor shaft driven by the wind impacting on the rotor blades. Further, the generator may be electrical connected to a converter, in particular a AC-DC-AC converter for converting a variable frequency power stream (or voltage or current) to a fixed frequency power stream (or voltage or current).

The electric power output by the converter may correspond to the power output of the wind turbine. The power output from the wind turbine converter may be characterized by the voltage at the wind turbine converter terminals and the output current from the wind turbine converter. Thereby, the output voltage and the output current may or may not be in phase, such that in particular a phase shift is present between the output voltage and the output current.

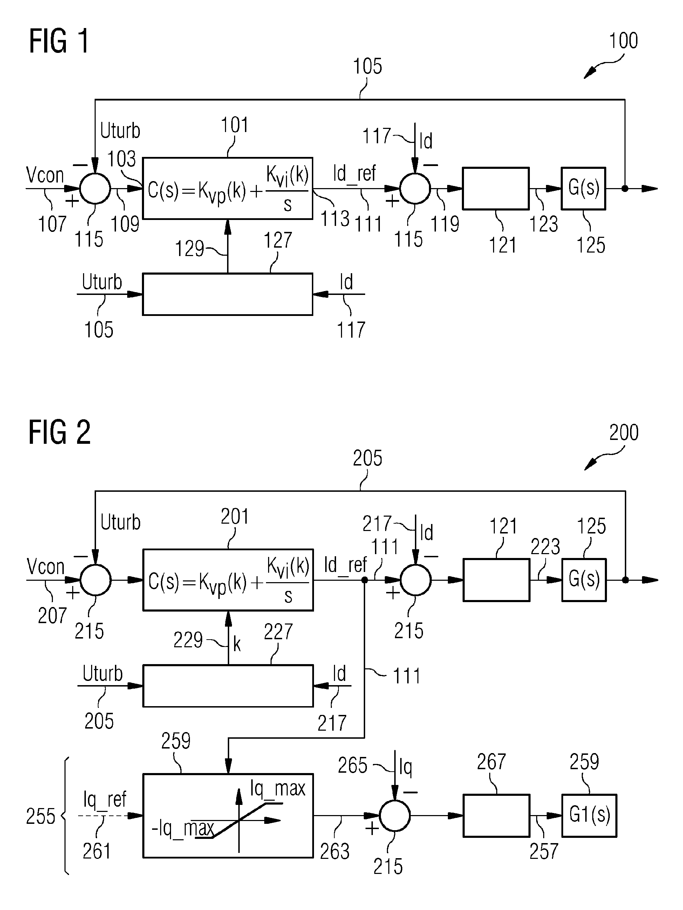

A portion of the power output is an active power output and another portion is a reactive power output. In analogy, a portion of the output current is a reactive power output current and another portion is an active power output current. The maximum current that can be outputted from a wind turbine may be limited by designed maximum current rating of converter. Depending on in particular the reactive power output current/reactive power a particular output voltage is achieved at the output terminal of the converter or the wind turbine. Thereby, adjusting the reactive power output current properly may result in the output voltage (at the wind turbine output terminal and/or at the PCC) being equal to its pre-defined voltage reference, e.g., Vcon in Figure.1.

The reference output voltage may indicate the intended output voltage of the wind turbine. The method may adjust the reactive power output current such that the intended output voltage is actually achieved at the output terminal of the wind turbine. Therefore, the system gain is estimated, wherein the system gain may describe a relationship between the output voltage of the wind turbine and the reactive power output current of the wind turbine.

Estimating this relationship and considering this relationship for controlling the wind turbine may improve the stability of the output voltage as well as dynamical performance of the wind turbine, in order to achieve the reference output voltage.

The reference reactive power output current signal may be determined in dependence of the voltage error signal and the system gain and may in particular vary with varying system gain. Thus, the reference reactive power output current signal may change, if the system gain changes. Thereby, the method takes the system gain into account, in contrast to conventional control methods. Thereby, in particular, the system gain may also depend on the active power production and may in particular depend on a grid impedance or may also depend on a sum of the grid impedance and the wind turbine transformer impedance.

The reference reactive power output current signal determined by the method may be supplied to the wind turbine, in particular to a converter of the wind turbine which will then output the corresponding reactive power reference output current, in order to adjust the output voltage of the wind turbine to the reference output voltage of the wind turbine.

In particular, the system gain may change e. g. due to a fault or a failure of a transmission line. In particular, the system gain may change very rapidly, in particular on a time scale of microseconds or milliseconds. In particular, if a short circuit ratio of the system or the grid is very low (wherein the short circuit ratio (SCR) is in particular proportional to an inverse of the grid impedance) consideration of the system gain proves to be advantageous for controlling the wind turbine. Thereby, the control method may be performed such that the reactive power current control may take a higher priority than the active power current control. In particular, Id being the reactive power current output and Iq being the active power current output, may be defined as follows:

$$I_d = \frac{Q}{Uturb}$$

$$I_q = \frac{P}{Uturb},$$

where P is active power production from wind turbine in pu (per unit) with the base of rated nominal power, Q is reactive power production from wind turbine in pu with the base of rated nominal power and Uturb is amplitude voltage value at the turbine terminal in pu with the base of nominal voltage.

According to an embodiment of the present invention the system gain is related to a ratio of the output voltage of the wind turbine and the reactive power output current of the wind turbine, in particular related to a derivative of the output voltage of the wind turbine in dependence of the reactive power output current of the wind turbine.

The system gain may be proportional to the ratio of the output voltage of the wind turbine and the reactive power output current of the wind turbine. In particular, the system gain may be proportional to a derivative of the output voltage of the wind turbine taken in dependence of the reactive power output current of the wind turbine. The output voltage as well as the reactive power output current of the wind turbine may be easily measured using conventional equipment. Thereby, the method may be simplified and the costs may be reduced.

The system gain may be proportional to the ratio of the output voltage of the wind turbine and the reactive power output of the wind turbine. In particular, the system gain may be proportional to a derivative of the output voltage of the wind turbine taken in dependence of the reactive power output of the wind turbine. The output voltage as well as the reactive power output of the wind turbine may be easily measured using conventional equipment. Thereby, the method may be simplified and the costs may be reduced.

According to an embodiment of the present invention the method is performed, wherein the values of the voltage controller parameters is adjusted based on system gain such that the similar steady state and dynamic response, in particular, rising time and settling down time, of electrical properties of electrical signals, in particular, active power and voltage at the turbine terminal can be obtained for different grid strength, in particular when the system gain supersedes a gain threshold.

In a conventional system a controller may be known in which the values of the controller parameters are constant without taking the system gain into account.

In contrast, according to this embodiment of the present invention, the values of the voltage controller parameters are adjusted based on system gain such that the similar response, in particular, rising time and settling down time, of electrical properties of electrical signals, in particular, active power and voltage at the turbine terminal can be obtained for different grid strength, in particular when the system gain supersedes a gain threshold.

Further, the reference reactive power output current signal is determined such that the (reference) reactive power output current increases with an increasing deviation between the output voltage of the wind turbine and the reference output voltage of the wind turbine. In particular, the control method may employ a PI-controller or a PID-controller having a proportional, an integrative, and a deviation term, wherein the terms are characterized by coefficients which may depend on the system gain. Thereby, conventionally available components may be adapted to be used for the method for adjusting the reactive power output current.

According to an embodiment of the present invention the method is performed, wherein the reference reactive power output current signal depends on a first term and second term, the first term being indicative of a product of a first coefficient times the deviation, the second term being indicative of a sum, in particular an integration sum, the sum being obtained by summing a first coefficient times the deviation for several time points.

In particular, according to this embodiment, the method employs a PI-controller having a proportional term and an integrative term. In particular, the first term may relate to the proportional term and the second term may relate to the integrative term. Thereby, the method may be simplified, while it may be ensured that reliable results are achieved.

According to an embodiment of the present invention the method is performed, wherein the first coefficient is constant and does not depend on the system gain at least in a first gain interval, wherein the second coefficient is constant and does not depend on the system gain at least in a first gain interval.

In a conventional system the first coefficient as well as the second coefficient may be constant for varying system gain, since the system gain may not be considered at all in a conventional system or method.

According to an embodiment of the present invention the method is performed, wherein the first coefficient depends on the system gain at least in a second gain interval spanning higher gain values than the first gain interval, wherein the second coefficient depends on the system gain at least in a second gain interval spanning higher gain values than the first gain interval.

The first gain interval may be characterized by two boundaries, such as a lower gain and an upper gain. The boundary is determined by the performance requirement.

As an example here, the lower gain boundary may for example amount to between 0.05 and 0.15, in particular to 0.1, wherein the upper gain boundary may for example amount to between 0.15 and 0.3, in particular to 0.2.

It has been found by the inventor that for a system gain below the upper system gain the variation of the system gain is not needed to be considered for controlling the wind turbine in a first approximation. However, if the system gain exceeds or falls above the upper system gain than increasing system gain affects very much the response of other electrical properties, such that the method changes its control mode, in order to maintain the output voltage of the wind turbine at the intended output voltage and also support reactive power. Thereby, requirements at the terminal of wind turbine or at the point of common coupling may be met.

According to an embodiment of the present invention the method is performed, wherein the first coefficient increases in the second gain interval for increasing gain, in particular linearly with increasing gain.

The first coefficient, in particular relating to the coefficient of the proportional term of the PI-controller, may stay constant between the lower gain and the upper gain and may increase above the upper gain for increasing system gain. The value of the first coefficient may be tuned individually for different system gain in order to meet requirement, such as similar dynamical performance for different system gain. According to an embodiment of the present invention the method is performed, wherein the second coefficient increases in the second gain interval for increasing gain, in particular linearly with increasing gain.

The second coefficient, in particular relating to the coefficient of the integral term of the PI-controller, may stay constant between the lower gain and the upper gain and may increase in a linear manner above the upper gain for increasing system gain. The value of the second coefficient may be tuned individually for different system gain in order to meet requirement, such as similar dynamical performance for different system gain.

Thereby, in particular it may be achieved that the similar response, in particular, rising time and settling down time, of electrical properties of electrical signals, in particular, active power and voltage at the turbine terminal can be obtained for different grid strength, in particular when the system gain supersedes a gain threshold.

A linear dependency of the first coefficient with the increasing gain may also simplify the method.

According to an embodiment of the present invention the method is performed, wherein the first coefficient is constant in the first gain interval for increasing gain. Keeping the first coefficient constant within the first gain interval may further simplify the method.

In particular, the first coefficient as well as the second coefficient may be obtained for different system gain values from a look-up table or/and from a curve or may be described by a mathematical function.

According to an embodiment of the present invention the method is performed, wherein a dependency of the system gain on a grid impedance is taken into account.

In particular, the grid impedance may be inversely related to the short circuit ratio (SCR). In particular, for a relatively high short circuit ratio (i. e. relatively low grid impedance) the system gain may slightly decrease with increasing reactive power output by the wind turbine. However, with decreasing short circuit ratio (increasing grid impedance) the system gain may more and more steeply fall with increasing reactive power output by the wind turbine. This kind of relationship may be taken into account when performing the method. Thereby, the method may be further improved.

According to an embodiment of the present invention the method is performed, wherein a dependency of the system gain on an active power output of the wind turbine is taken into account.

In particular, a dependency of the system gain on the grid impedance as well as on the active power output from the wind turbine may be taken into account. In particular, an absolute value of a gradient (in particular having negative slope) of the system gain in dependence or increasing reactive power output by the wind turbine may increase with decreasing short circuit ratio (increasing grid impedance) and increasing active power output (or loading) of the wind turbine. Depending on the slope or gradient of the system gain in dependence of the reactive power output of the wind turbine or in dependence of the active power output current of the wind turbine the control method may be adapted, wherein in particular the first coefficient and/or the second coefficient may be adapted.

According to an embodiment of the present invention, the method further comprises estimating the system gain on-line in real time, in particular repeatedly every time interval, the time interval being related to the sampling period of the voltage controller.

In particular, the system gain may change rapidly due to a number of reasons, such a transmission line fault or others. In particular, the system gain may be monitored regularly and continuously in order to rapidly detect changes of the system gain and adapt the control method accordingly. Thereby, the control method may be further improved and the output voltage of the wind turbine may be maintained within the intended voltage range.

According to an embodiment of the present invention the method is performed, wherein the output voltage of the wind turbine and the reactive power output current of the wind turbine are measured for estimating the system gain.

The ratio or the derivative of the output voltage and the reactive power output current may be determined continuously and may be compared to theoretically derived values of the system gain.

According to an embodiment the method further comprises adjusting an active power output current of the wind turbine in dependence of the reactive power output current such that the active power output current is reduced, if system gain is above a gain threshold and/or if the active power output current is limited to the amount of available current capability of turbine after producing the required reactive power for voltage support.

Thereby, a priority or electrical properties to be controlled or regulated may be defined. In particular, as a highest priority the output voltage of the wind turbine may be controlled to its reference. Secondly, the reactive power output current may be regulated or controlled to support a certain voltage at turbine terminal. Thirdly, the active power output by the wind turbine may be controlled to be within a predetermined active power output range. However, the active output power may be reduced if the reactive power output current increases or if the system gain increases above a certain threshold. Thereby, safe operation of the wind turbine and its components may be insured.

It should be understood that features individually or in any combination disclosed, described, explained, employed or applied to a method for adjusting a reactive power output current of a wind turbine may also be (individually or in any combination) employed, provided for, applied to an arrangement for adjusting a reactive power output current according to an embodiment of the present invention and vice versa.

It has to be noted that embodiments of the invention have been described with reference to different subject matters. In particular, some embodiments have been described with reference to method type claims whereas other embodiments have been described with reference to apparatus type claims. However, a person skilled in the art will gather from the above and the following description that, unless other notified, in addition to any combination of features belonging to one type of subject matter also any combination between features relating to different subject matters, in particular between features of the method type claims and features of the apparatus type claims is considered as to be disclosed with this document.

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

Embodiments of the present invention are now described with reference to the accompanying drawings.

Brief Description of the Drawings

Figure 1    schematically illustrates an arrangement for adjusting a reactive power output current according to an embodiment of the present invention;

Figure 2    schematically illustrates an arrangement for adjusting a reactive power output current according to another embodiment of the present invention;

Figure 3    schematically illustrates a system model and a equivalent circuit scheme for deriving relationships of electrical properties;

Figures 4 to 6      illustrate graphs indicating a relationship between a system gain and a reactive power;

Figures 8 to 11      illustrate graphs indicating a relationship between a system gain and the reactive power output by the wind turbine;

Figure 12      schematically illustrates a dependence of another coefficient of a controller from a system gain according to an embodiment of the present invention; and

Figure 13      illustrates graphs showing electrical properties as found by the inventors and considered in a method according to an embodiment of the present invention.

<u>Detailed Description</u>

The illustration in the drawings is in schematic form. It is noted that in different figures, similar or identical elements are provided with the same reference signs or with reference signs, which are different from the corresponding reference signs only within the first digit.

Conventional, in a strong grid, the power angle $\delta$ depends predominantly on active power P whereas the voltage difference depends predominantly on reactive power Q. As a result, in a conventional system, active power production will have impact on grid frequency only and will have negligible effect on grid voltage. However, in a weak grid, as the inventors found out, active power production may have a significant impact on the voltage profile.

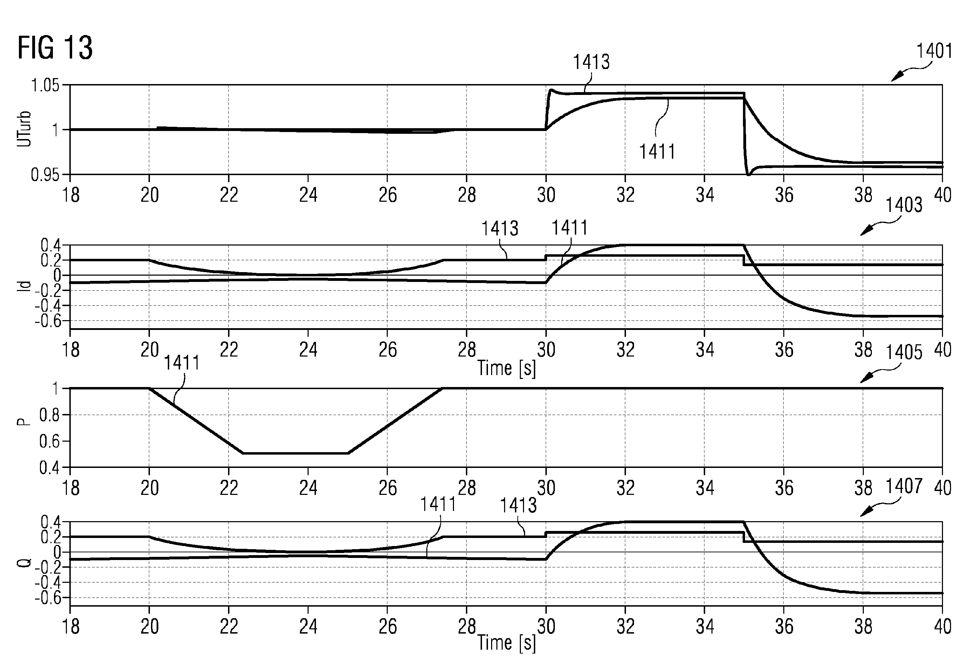

This can be illustrated in Figure 13. **Figure 13** shows simulation results of (from top to bottom) turbine terminal voltage UTurb (1401), reactive power current Id (1403), active power P (1405) and reactive power Q (1407) of wind turbine for a strong grid (curves 1411) and a weak grid (curves 1413) (depending on the time at the abscissa), when there is change in active power reference and voltage reference, respectively.

It can be seen from Figure 13 that in order to maintain the same voltage at the turbine terminal in a weak grid when active power is ramping down and up during 20s to 30s, the change in reactive power current / reactive power in a weak grid is dramatically compared to that in a strong grid where the reactive power current / reactive power is almost constant. On the other hand, in order to follow voltage reference change during 30s to 40s, the change in reactive power current / reactive power in a weak grid is much less than that in a strong grid. In addition, in order to obtain similar responses in voltage and active power in a weak grid and a strong grid as illustrated in the Figure 13, wind turbine controller or at least the wind turbine controller parameters should be adjusted based on strength of grid.

Based on these findings the inventors devised methods and systems to control a wind turbine.

**Figure 1** schematically illustrates an arrangement 100 for adjusting a reactive power output current of a not illustrated wind turbine according to an embodiment of the present invention, wherein the arrangement 100 is adapted to carry out a method for adjusting a reactive power output current according to an embodiment of the present invention.

The reactive power output current controller 100 illustrated in Fig. 1 receives at an input terminal 103 a deviation 109 between an output voltage 105 (also denoted as Uturb) and a reference voltage 107 (also denoted as Vcon), wherein the deviation 109 is supplied to the input terminal 103 of the reactive power output current controller 101.

In the illustrated embodiment the controller 103 is configured as a PI-controller adapted to decrease the deviation 109 to zero by outputting a reference reactive power output current signal 111 (also denoted as Id ref) which is output at the output terminal 113. A difference forming element 115 receives the actual reactive power output current 117 (also denoted as Id) which is actually output by the not illustrated wind turbine.

A deviation 119 between the reference reactive power output current signal 111 and the actual reactive power output current 117 (or a signal derived therefrom) is labelled by reference sign 119 and is supplied to a current controller 121 which is adapted to generate a reactive power output current 123 that corresponds via the gain G(s) (reference sign 125) to the output voltage 105 which should be equal to the reference voltage 107.

The arrangement 100 further comprises a gain estimation module 127 to which the output voltage 105 and the actual reactive power output current 117 are supplied and based on which the gain estimation module 127 estimates the gain quantity 129 (which is also referred to or related to k). Based upon the gain quantity 129 (k) which is delivered to the controller 101 the controller 101 adapts coefficients $K_{vp}$ and $K_{ve}$ of the PI-controller to derive the reference reactive power output current signal 111.

In particular, the current controller 121 causes the wind turbine to generate the reactive power output current 123 which according to the estimated gain G(s) corresponds to the particular output voltage 105.

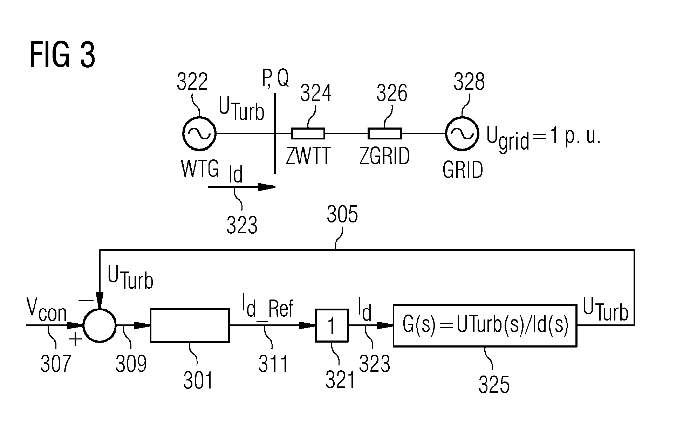

The arrangement 100 illustrated in Figure 1 takes into account the model of the / the gain of system and the circuit scheme illustrated in **Figure 3.** Thereby, a controller 301 derives, based on a deviation 309 between an output voltage 305 and a reference voltage 307, a reference reactive power output current signal 311. The current controller 321 (which is regarded as ideal here with a gain of 1) receives the reference reactive power output current signal 311 and generates a reactive power output current 123 which is associated (via the gain G(s), i. e. modelled by the box 325, to the output voltage 305 (Uturb).

In some other arrangement, a controller 301 derives, based on a deviation 309 between an output voltage 305 and a reference voltage 307, a reference reactive power output signal 311. The reactive power controller 321 (which is regarded as ideal here with a gain of 1) receives the reference reactive power output signal 311 and generates a reactive power output 123 which is associated (via the gain G(s), i. e. modelled by the box 325, to the output voltage 305 (Uturb).

In the upper part of Fig. 3 the wind turbine 322 is connected to a wind turbine transformer having a wind turbine transformer impedance 324 (ZWTT), wherein the wind turbine 322 is connected via the grid impedance 326 (ZGRID) to the utility grid 328. Here, grid impedance might be determined by summation of impedance of park transformer, transmission lines and other components between grid and wind turbines. The grid voltage Ugrid is determined by external grid, which can be 1 pu or some other values.

As can be taken from Figure 3 the gain G(s) = Uturb(s)/Id(s). Thereby, the variable s denotes the variable after a Laplace transform of the variables in the time domain. According to an embodiment of the present invention it is assumed that the grid voltage is to be maintained constant at 1 p. u. and the short circuit ratio and the inductance X and the resistance R of the grid are known. Thereby, the total impedance Z = Zwtt + Zgrid, wherein $Z^2 = R^2 + X^2$.

The wind turbine output voltage Uturb (compare reference sign 105 in Figure 1 or reference sign 305 in Figure 3) can be obtained as a function of several electrical properties, P, Q, X, S, Ugrid, Z.

Thereby, P is the active power at the wind turbine output terminal and Q is the reactive power at the wind turbine output terminal and S is the apparent power, wherein

$$S = \sqrt{P^2 + Q^2}$$

The short circuit ratio (SCR) is defined as

$$SCR = \frac{\text{short circuit level at PCC}}{S_{base}}$$

With $S_{base}$ = nominal installed capacity.

$$Z_{grid} = \frac{V_{pcc}^2}{S_{sc}}$$

$S_{sc}$ is short circuit level at PCC.

$$R = Z_{grid} * \sqrt{1/(1+(X2R)^2)} \quad \text{and} \quad X = R * X2R$$

With $X2R = X/R$.

The turbine output voltage is a function of the reactive power Q injected at the turbine terminal. During controlling the wind turbine the amplitude of the wind turbine output terminal voltage should be within its allowed operating range, for example, [0.92; 1.08] and the wind turbine may be operated within its allowed power factor range, e.g., 0.9 leading/lagging. This may set a limit for the voltage and reactive power at the low voltage side of the wind turbine transformer (related to the element 324 in Figure 3).

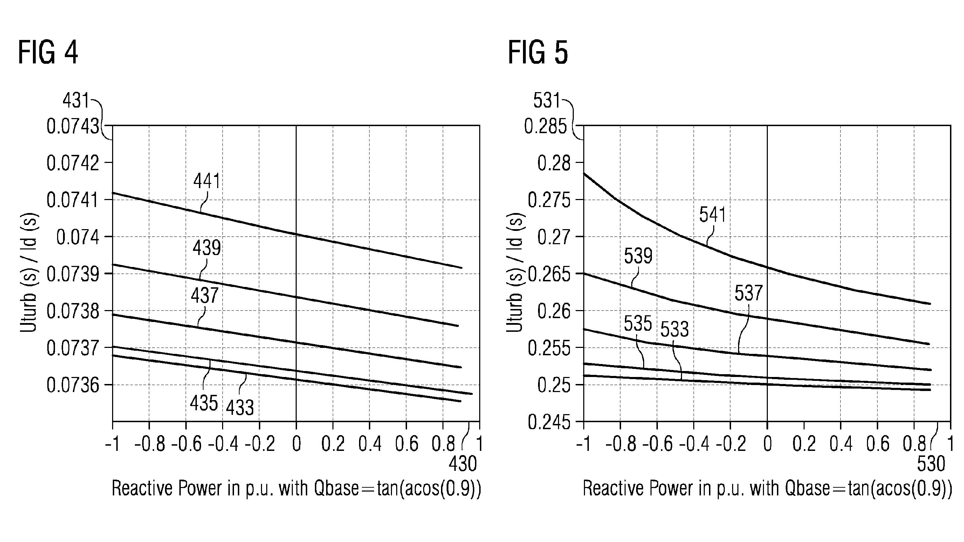

**Figures 4 to 7** illustrate curve of the system gain G(s) in relation to the reactive power (output by the wind turbine) which is indicated at respective abscissas 430, 530, 630, 730. At the ordinates 431, 531, 631 and 731 in Figures 4 to 7, respectively, the system gain G(s) as obtained by measuring the output voltage Uturb and the reactive power output current Id (and forming the ratio therefrom) is indicated.

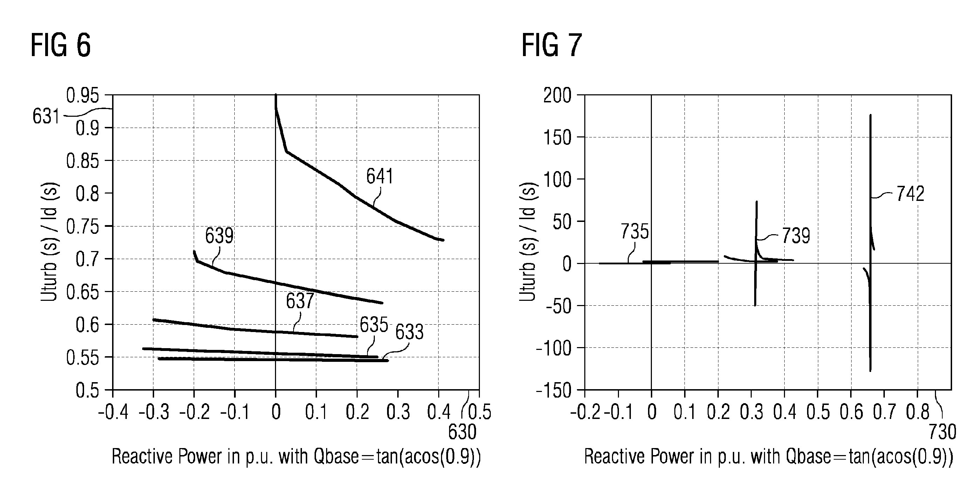

In Figure 4 the short circuit ratio is 50, in Figure 5 the short circuit ratio is 5, in Figure 6 the short circuit ratio is 2 and in Figure 7 the short circuit ratio is 1. Further, the system gain is indicated for a plurality of different loadings of the wind turbine, i. e. different amounts of active power output by the wind turbine. Thereby, a curve corresponding to the load of zero is labelled with a reference sign ending with 33, a load of 25% is labelled by a reference sign ending with 35, a load of 50% is denoted as a curve labelled with a reference sign ending with 37, a load of 75% is indicated by a curve labelled with a reference sign ending with 39 and a load of 99% is indicated by a curve labelled with a reference sign ending with 41 (which holds also for Figs. 5 to 7 and 8 to 11). The curve in Figure 7 labelled with reference sign 742 corresponds to the load of 90%.

In Figures 4 to 7 the ratio X/R = 5. It can be seen from Figures 4 to 7 that the gain curve G(s) for a utility grid with a higher short circuit ratio (SCR) is flat with smaller amplitudes. On the other hand, gain curves have a steep slope at negative reactive power/lower turbine voltage. This trend becomes obvious when SCR is 2 (compare Figure 6).

When SCR is 1 (see Figure 7) and when the loading or load of the wind turbine is about 75% the value of the gain curve becomes negative. This phenomenon indicates an unstable situation. The unstable behaviour may be explained with reference to Figure 3, lower portion. Assuming that the wind turbine operates at a loading of 90% and assuming that there is disturbance from the grid voltage resulting in Uturb being less than its reference, the turbine voltage controller may increase Idref to illuminate this error. However, this leads to the behaviour that Uturb drops further.

On the hand, assuming that the wind turbine operates at 90% loading and assuming that there is disturbance from the grid voltage resulting in Uturb being higher than its reference, the wind turbine voltage controller might decrease Idref to illuminate this error. This leads to the behaviour that Uturb increases further. In conclusion, the wind turbine output voltage may not reach an equilibrium point in both cases, according to a conventional method.

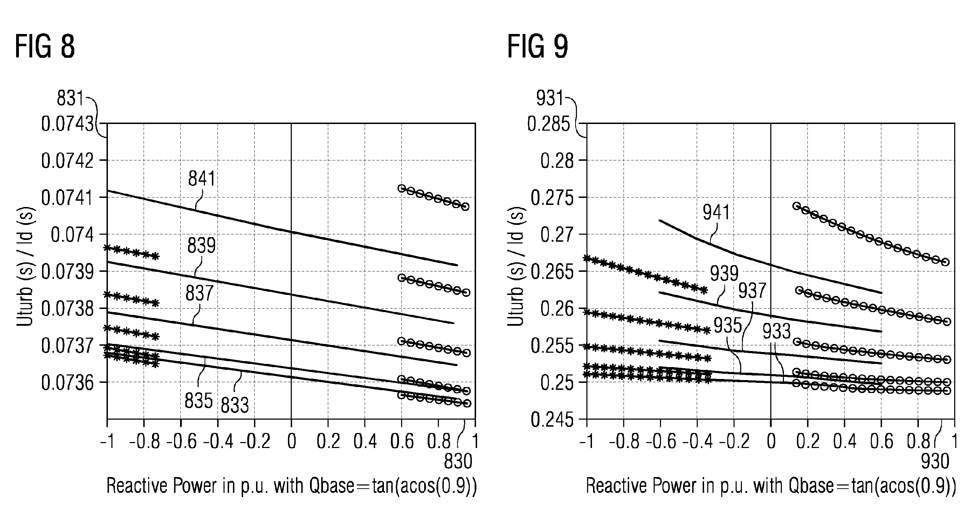

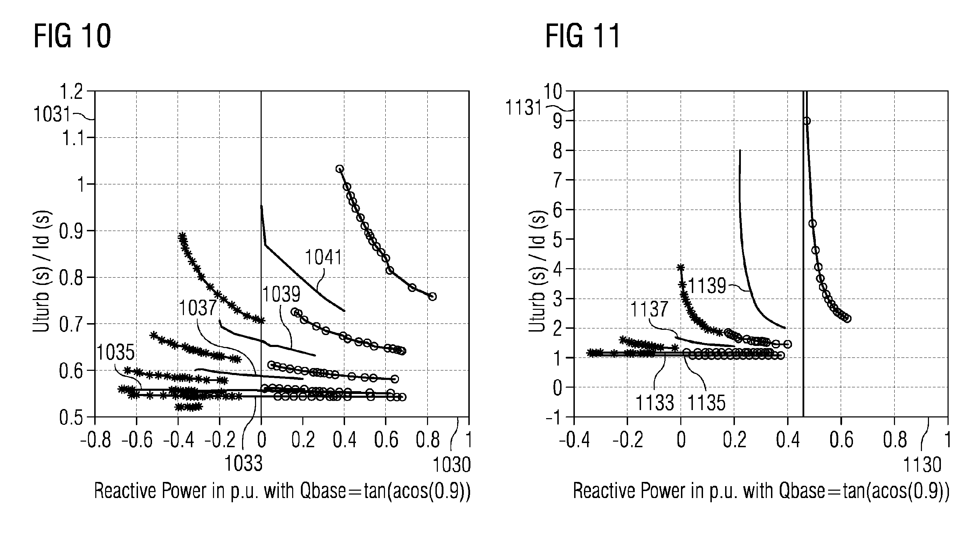

**Figures 8 to 11** illustrate the system gain G(s) derived as a ratio between Uturb(s) and Id(s) indicated at the ordinates 831 to 1131 in dependence of the reactive power indicated at the abscissas 830-1130, respectively. Hereby, in analogy to the graphs illustrated in Figures 4 to 7 the gain curves are illustrated for different loadings of the wind turbine. Further different short circuit ratios, i.e. SCR = 50 in Fig. 8, SCR = 5 in Fig. 9, SCR = 2 in Fig. 10, and SCR = 1 in Fig. 11, are used.

Herein, results presented with solid line are obtained with Ugrid = 1 p.u., results presented with a star are obtained with Ugrid = 1.1 p.u. and results presented with a circuit were obtained with Ugrid = 0.9 p.u.. It can be seen that the SCR value of 50, 5, 2 and 1 and loading (active power production) has a dominant effect on the amplitude of the grid gain G(s), whereas variation in grid voltage has minor effect on the amplitude of G(s), whereas variation in grid voltage has minor effect on the amplitude of the grid gain.

As has been explained above the system gain G(s) can be estimated using the wind turbine output voltage Uturb and the reactive current Id. In particular, the system gain may be defined as

$$k = f(Uturb, Id) \qquad (2)$$

As an example, k may be defined as

$$k = \frac{U_{turb2} - U_{turb1}}{I_{d2} - I_{d1}} \qquad (3)$$

According to an embodiment of the present invention the controller 101 and/or the controller 201 illustrated in Figure 2 may be implemented as a PI-controller, which may be defined according to:

$$C(s) = K_{vp}(k) + \frac{K_{vi}(k)}{s} \qquad (4)$$

As an example implementation a constant integrator gain coefficient Kvi may be used and the proportional coefficient Kvp is adjusted according to the system gain k based on a lookup table or a predefined curve.

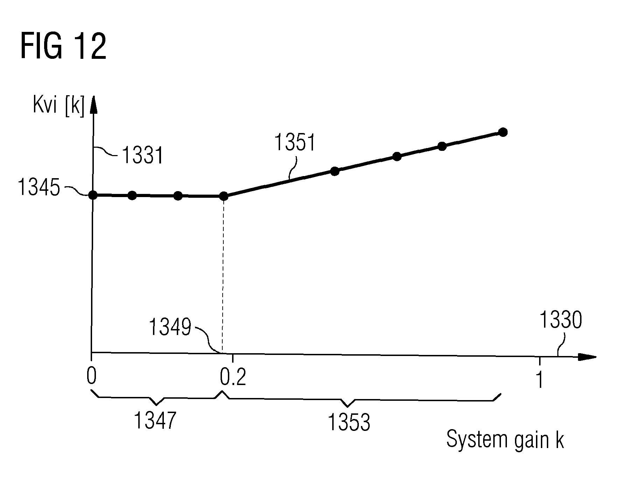

**Figure 12** illustrates a graph as an example how the coefficient of the integrative term of the PI-controller may vary for varying system gain (denoted as k or G(s)).

In Figure 12 on an abscissa 1330 the system gain k is indicated, while on an ordinate 1331 the coefficient Kvi as used in Equation 4 is indicated. As is evident from Figure 12 the integrative coefficient Kvi is at a constant value 1345 within an gain interval 1347 which is defined between system gain 0 and the threshold 1349. Above the threshold 1349 the coefficient Kvi increases according to the line 1351 in a linear manner, in particular within the interval 1353 of the gain k.

When such a variation of the coefficient Kvi is used within the controller 101 or 201 the wind turbine may be controlled in an improved manner, in order to achieve the correct output voltage 105 and also to achieve the appropriate reactive power output.

**Figure 2** illustrates another embodiment of an arrangement 200 for adjusting a reactive power output current 223, of a wind turbine, wherein the arrangement 200 comprises similar components as the arrangement 100, wherein corresponding components of the arrangement 100 and 200 are denoted by same reference signs differing only in the first digit.

In addition to the components of the arrangement 100 the arrangement 200 further comprises a section 255 for controlling the wind turbine regarding its active power current output 257. For this purpose, the arrangement 200 comprises a limitation element 259 which receives the reference active power output current 261 and also the reference reactive power output current signal 111 which is output by the controller 201. Thereby, the limitation element 259 may cause a curtailment or reduction of active power output, when the system gain is greater than a threshold. The active power curtailment may be performed in different ways depending on the application and situation.

If it is known beforehand that the system short circuit ratio (SCR) is low, such as lower than 5, then the reactive power current may be set to have a higher priority than the active power current all the time.

If the SCR is high, active power current may have a higher priority than the reactive power current initially. The system gain may then be monitored and when the system gain is greater than a threshold kth, then the active power curtailment may be enabled. When the system gain k is for example greater than kth, reactive power current may have a higher priority than active power current. Therefore, active current may be limited by capabilities of the turbine and needed reactive current with a pre-defined safety margin.

$$I_{q\_\max} = \sqrt{I_{\max}^2 - I_{d\_\mathrm{Re}f}^2} - I_{M\arg in} \qquad (5)$$

$$I_{q\_ref} < I_{q\_\max} \qquad (6)$$

As an alternative, the active power may be limited by capabilities of the turbine and needed reactive current with a pre-defined safety margin.

$$P_{\max} = (\sqrt{I_{\max}^2 - I_{d\_\mathrm{Re}f}^2} - I_{M\arg in}) * U_{turb} \qquad (7)$$

$$P_{ref} < P_{\max} \qquad (8)$$

This limitation may be performed by the limitation element 259. Thereupon, the limitation element 259 outputs a reference active power current signal 263 to be within the allowed bounds and compares it to the actual active power current output 265 output by the wind turbine. The active power current controller receives a deviation between the signals 263 and 265 and outputs the active power current output 257 which is associated via another gain G1(s) to the wind turbine output voltage.

It should be noted that the term "comprising" does not exclude other elements or steps and "a" or "an" does not exclude a plurality. Also elements described in association with different embodiments may be combined. It should also be noted that reference signs in the claims should not be construed as limiting the scope of the claims.

## EP 2 605 356 A1

**Claims**

1. Method for adjusting a reactive power output current 123, 323) of a wind turbine (322) which is connected to a utility grid (328), the method comprising:

   receiving a voltage error signal (109, 209) indicative of a deviation between an output voltage (105, 205) of the wind turbine and a reference output voltage (107, 207) of the wind turbine;

   estimating a system gain (129, G(s), k) related to the output voltage of the wind turbine and the reactive power output current of the wind turbine;

   determining a reference reactive power output current signal (111, 211) and/or a reference reactive power output signal related to a reference reactive power output current and/or a reference reactive power output, respectively, based on the voltage error signal and the system gain;

   supplying the reference reactive power output current signal and/or the reference reactive power output signal to the wind turbine; and

   outputting, by the wind turbine, the reactive power output current (123, 223) and/or the reactive power output, in order to adjust the output voltage of the wind turbine to the reference output voltage of the wind turbine.

2. Method according to claim 1, wherein the system gain (G(s)) is related to a ratio of the output voltage of the wind turbine and the reactive power output current of the wind turbine, in particular related to a derivative of the output voltage of the wind turbine in dependence of the reactive power output current of the wind turbine.

3. Method according to claim 1, wherein the system gain (G(s)) is related to a ratio of the output voltage of the wind turbine and the reactive power of the wind turbine, in particular related to a derivative of the output voltage of the wind turbine in dependence of the reactive power of the wind turbine.

4. Method according to one of claims 1 to 3, wherein the values of the voltage controller parameters is adjusted based on the system gain such that a similar steady-state and dynamic response, in particular, steady-state error, rising time and settling down time, of electrical properties of electrical signals, in particular active power and voltage at the turbine terminal, can be obtained for different grid strengths, in particular when the system gain supersedes a gain threshold.

5. Method according to one of the preceding claims, wherein the reference reactive power output current signal (111) depends on a first term and second term,
   the first term being indicative of a product of a first coefficient (Kvp) times the deviation,
   the second term being indicative of a sum, in particular an integration sum, the sum being obtained by summing a second coefficient (Kvi) times the deviation for several time points.

6. Method according to claim 5, wherein the first coefficient (Kvp) is constant and does not depend on the system gain at least in a first gain interval (1247),
   wherein the second coefficient (Kvi) is constant and does not depend on the system gain at least in the first gain interval, the first gain interval having in particular an upper border at a gain value of between 0.1 and 0.3, in particular a gain value of 0.2.

7. Method according to claim 5 or 6, wherein the first coefficient (Kvp) depends on the system gain at least in a second gain interval (1253) spanning higher gain values than the first gain interval (1247),
   wherein the second coefficient depends on the system gain at least in the second gain interval (1253).

8. Method according to claim 7,
   wherein the first coefficient (Kvp) increases in the second gain interval (1253) for increasing gain, in particular linearly with increasing gain, wherein the second coefficient (Kvi) increases in the second gain interval (1253) for increasing gain, in particular linearly with increasing gain.

9. Method according to one of the preceding claims,
   wherein a dependency of the system gain on a grid impedance (Zgrid)or short circuit capacity is taken into account and/or wherein a dependency of the system gain on an active power output of the wind turbine is taken into account.

10. Method according to one of the preceding claims,
    wherein a dependency of the system gain on an grid voltage is taken into account.

**11.** Method according to one of the preceding claims, further comprising:

estimating the system gain on-line in real time, in particular repeatedly every time interval, the time interval being related of the voltage controller' sampling time; and/or
estimating the system gain off-line for known grid configuration and normal operation beforehand, determining gain of voltage controller parameters and setting reactive power current higher priority than active power current, if the estimated system gain is higher than a threshold; and/or
estimating the system gain in the same processor used by turbine controller or estimating the system gain in an individual processor and sending the system gain to turbine controller.

**12.** Method according to one of the preceding claims, wherein the output voltage of the wind turbine and the reactive power output current of the wind turbine are measured for estimating the system gain.

**13.** Method according to one of the preceding claims, wherein the reference active power current signal (257) is determined such that the active power output current is limited to the amount of available current capability of turbine with a pre-defined safety margin after producing the required reactive power for voltage support and/or if system gain is above a gain threshold.

**14.** Arrangement (100, 200) for adjusting a reactive power output current of a wind turbine which is connected to a utility grid, the arrangement comprising:

an input terminal (103, 203) for receiving a voltage error signal indicative of a deviation between an output voltage of the wind turbine and a reference output voltage of the wind turbine;
a processor (101, 201) adapted
to estimate a system gain related to the output voltage of the wind turbine and the reactive power output current of the wind turbine;
to determine a reference reactive power output current signal and/or a reference reactive power output signal related to a reactive power reference output current and/or a reference reactive power output, respectively, based on the voltage error signal and the system gain such that upon supplying the reference reactive power output current signal to the wind turbine, the reactive power reference output current is output.

FIG 1

FIG 2

FIG 3

## FIG 5

Uturb (s) / Id (s)

531

0.285
0.28
0.275
0.27
0.265
0.26
0.255
0.25
0.245

541
539
537
535 533

Reactive Power in p.u. with Qbase=tan(acos(0.9))

-1 -0.8 -0.6 -0.4 -0.2 0 0.2 0.4 0.6 0.8 1

530

## FIG 4

Uturb (s) / Id (s)

431

0.0743
0.0742
0.0741
0.074
0.0739
0.0738
0.0737
0.0736

441
439
437
435 433

Reactive Power in p.u. with Qbase=tan(acos(0.9))

-1 -0.8 -0.6 -0.4 -0.2 0 0.2 0.4 0.6 0.8 1

430

## FIG 6

631

Uturb (s) / Id (s)

0.95
0.9
0.85 — 641
0.8
0.75
0.7 — 639
0.65 — 637
0.6
0.55 — 635  633
0.5

-0.4 -0.3 -0.2 -0.1 0 0.1 0.2 0.3 0.4 0.5
630

Reactive Power in p.u. with Qbase=tan(acos(0.9))

## FIG 7

Uturb (s) / Id (s)

200
150
100 — 742
50 — 735  739
0
-50
-100
-150

-0.2 -0.1 0 0.1 0.2 0.3 0.4 0.5 0.6 0.7 0.8
730

Reactive Power in p.u. with Qbase=tan(acos(0.9))

EP 2 605 356 A1

FIG 8

Uturb (s) / Id (s)

831
0.0743
0.0742
0.0741
0.074
0.0739
0.0738
0.0737
0.0736

841
839
837
835  833

-1  -0.8 -0.6 -0.4 -0.2  0  0.2  0.4  0.6  0.8  1
830

Reactive Power in p.u. with Qbase=tan(acos(0.9))

FIG 9

Uturb (s) / Id (s)

931
0.285
0.28
0.275
0.27
0.265
0.26
0.255
0.25
0.245

941
939
937
935  933

-1  -0.8 -0.6 -0.4 -0.2  0  0.2  0.4  0.6  0.8  1
930

Reactive Power in p.u. with Qbase=tan(acos(0.9))

EP 2 605 356 A1

**FIG 11**

**FIG 10**

FIG 12

FIG 13

Europäisches
Patentamt

European
Patent Office

Office européen
des brevets

# EUROPEAN SEARCH REPORT

**Application Number**

EP 11 19 3814

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 5 083 039 A (RICHARDSON ROBERT D [US] ET AL) 21 January 1992 (1992-01-21) | 1-6,9-14 | INV. H02J3/10 H02J3/18 H02J3/38 |
| A | * column 16, line 67 - column 18, line 43; figures 2,13 * | 7,8 | |
| X | US 5 225 712 A (ERDMAN WILLIAM L [US]) 6 July 1993 (1993-07-06) | 1-6,9-14 | |
| A | * column 22, line 44 - column 26, line 40; figures 2,13 * | 7,8 | |
| X | WO 2010/089253 A1 (DONG ENERGY POWER AS [DK]; BOERRESEN SIMON [DK]; HILGER KLAUS B [DK];) 12 August 2010 (2010-08-12) | 1-6,9-14 | |
| A | * figure 1 * | 7,8 | |
| X | US 2007/246943 A1 (CHANG LIUCHEN [CA] ET AL CHANG LIUCHEN [CA]) 25 October 2007 (2007-10-25) | 1-6,9-14 | |
| A | * paragraph [0113] * | 7,8 | |

**TECHNICAL FIELDS SEARCHED (IPC)**

H02J

The present search report has been drawn up for all claims

| Place of search | Date of completion of the search | Examiner |
|---|---|---|
| Munich | 25 April 2012 | Ramcke, Ties |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

**ANNEX TO THE EUROPEAN SEARCH REPORT
ON EUROPEAN PATENT APPLICATION NO.**

EP 11 19 3814

This annex lists the patent family members relating to the patent documents cited in the above-mentioned European search report.
The members are as contained in the European Patent Office EDP file on
The European Patent Office is in no way liable for these particulars which are merely given for the purpose of information.

25-04-2012

| Patent document cited in search report | | Publication date | Patent family member(s) | | Publication date |
|---|---|---|---|---|---|
| US 5083039 | A | 21-01-1992 | AU | 1554292 A | 07-09-1992 |
| | | | CA | 2100672 A1 | 02-08-1992 |
| | | | DE | 69228053 D1 | 11-02-1999 |
| | | | DE | 69228053 T2 | 27-05-1999 |
| | | | DE | 69233343 D1 | 13-05-2004 |
| | | | DE | 69233343 T2 | 17-03-2005 |
| | | | DK | 0569556 T3 | 30-08-1999 |
| | | | EP | 0569556 A1 | 18-11-1993 |
| | | | EP | 1432115 A2 | 23-06-2004 |
| | | | ES | 2127216 T3 | 16-04-1999 |
| | | | ES | 2219807 T3 | 01-12-2004 |
| | | | JP | 3435474 B2 | 11-08-2003 |
| | | | JP | H06505618 A | 23-06-1994 |
| | | | US | 5083039 A | 21-01-1992 |
| | | | WO | 9214298 A1 | 20-08-1992 |
| US 5225712 | A | 06-07-1993 | NONE | | |
| WO 2010089253 | A1 | 12-08-2010 | CN | 102365593 A | 29-02-2012 |
| | | | EP | 2394204 A1 | 14-12-2011 |
| | | | KR | 20110136803 A | 21-12-2011 |
| | | | US | 2012053751 A1 | 01-03-2012 |
| | | | WO | 2010089253 A1 | 12-08-2010 |
| US 2007246943 | A1 | 25-10-2007 | NONE | | |